# EUROPEAN PATENT SPECIFICATION

(11) **EP 3 763 218 B1**
(45) Date of publication and mention of the grant of the patent: **30.07.2025**
(21) Application number: 19764369.5
(22) Date of filing: 21.01.2019
(51) Int. Cl.: A23C 9/13, A23C 19/00, A23D 9/00, A23L 5/00, A23D 7/00, A23C 19/093, A23D 7/01

(54) **METHOD FOR PRODUCING A HIGHLY UNSATURATED FATTY ACID-CONTAINING FOOD PRODUCT**
VERFAHREN ZUR HERSTELLUNG EINES LEBENSMITTELPRODUKTES MIT HOCH UNGESÄTTIGTEN FETTSÄUREN
PROCÉDÉ DE FABRICATION D'UN PRODUIT ALIMENTAIRE CONTENANT DES ACIDES GRAS HAUTEMENT INSATURÉS

(30) Priority: 07.03.2018 JP 2018040718
(43) Date of publication of application: 13.01.2021
(73) Proprietor: Fuji Oil Holdings Inc., Izumisano-shi, Osaka 598-8540 (JP)
(72) Inventor: MORIKAWA, Miwako, Izumisano-shi, Osaka 598-8540 (JP); KATO, Masaharu, Izumisano-shi, Osaka 598-8540 (JP)
(74) Representative: Becker, Eberhard
(86) International application number: PCT/JP2019/001606
(87) International publication number: WO 2019/171788

(56) References cited:
- WO-A1-2018/061723
- JP-A- 2005 185 234
- JP-A- H07 227 227
- JP-A- H08 214 774
- JP-A- H08 322 464
- US-A1- 2012 128 850
- US-A1- 2013 177 689
- MOORE R.L. ET AL: "Oxidative stability of an extended shelf-life dairy-based beverage system designed to contribute to heart health", JOURNAL OF DAIRY SCIENCE, vol. 95, no. 11, 1 November 2012 (2012-11-01), US, pages 6242 - 6251, XP055869115, ISSN: 0022-0302, DOI: 10.3168/jds.2012-5364
- THOMSEN BIRGITTE RAAGAARD ET AL: "Improving oxidative stability of liquid fish oil supplements for pets", EUROPEAN JOURNAL OF LIPID SCIENCE TECHNOLOGY, vol. 119, no. 6, 6 June 2017 (2017-06-06), DE, pages 1600492, XP055869097, ISSN: 1438-7697, Retrieved from the Internet <URL:https://onlinelibrary.wiley.com/doi/full-xml/10.1002/ejlt.201600492> [retrieved on 20211203], DOI: 10.1002/ejlt.201600492
- METTE B. LET ET AL: "Effects of fish oil type, lipid antioxidants and presence of rapeseed oil on oxidative flavour stability of fish oil enriched milk", EUROPEAN JOURNAL OF LIPID SCIENCE TECHNOLOGY, vol. 106, no. 3, 8 March 2004 (2004-03-08), DE, pages 170 - 182, XP055514701, ISSN: 1438-7697, [retrieved on 20211203], DOI: 10.1002/ejlt.200300901
- KONISHI, HIROAKI; SHIOTA MAKOTO; TATSUMI KIYOSHI: "Prevention of Fish Oil Oxidation by Addition of Vegetable Oils and Butter Oil. Effect of Dilution on Radical Chain Transfer", PROCEEDINGS OF THE ANNUAL MEETING OF THE JAPAN OIL CHEMISTRY SOCIETY 1999 (THE 38TH OIL CHEMISTRY CONFERENCE),, 20 October 1999 (1999-10-20), JP, pages 152, XP009522698
- JAPAN OIL CHEMISTS' SOCIETY EDITION: "The handbook of oil chemistry: lipids and surfactants", 20 November 2001, MARUZEN CO., LTD., ISBN: 4-621-04947-X, article "Oil Chemistry Handbook: Lipids/surfactants", pages: 604, XP009522699

## Description

### BACKGROUND OF THE INVENTION

### Technical Field

The present invention relates to a method for producing a highly unsaturated fatty acid-containing food product, and particularly relates to a food product containing a milk material and having a pH of 3 to 5.5.

### Related Art

Patent literature 1 is an application relating to yoghurt which contains an oil/fat containing a highly unsaturated fatty acid such as DHA (docosahexaenoic acid), EPA (eicosapentaenoic acid), or the like. In the application, it is recited that for a purpose of "providing highly unsaturated fatty acid-containing yoghurt which does not cause fishy odour during a usually expected storage period and has a good flavor and excellent quality stability", "one or more sweet substances selected from a group consisting of palatinose, palatinit, maltose, maltitol, starch syrup, reduced starch syrup and trehalose are added to yoghurt containing lactic acid bacterium and bifidobacterium, a purified fish oil containing a highly unsaturated fatty acid such as DHA or the like is further added and then the product is filled into an oxygen-blocking sealed container".

In patent literature 2, the title of the invention is "fish oil emulsified composition and milk-related beverage having fish oil emulsified composition blended therein", and application in yoghurt is recited as the "milk-related beverage".

### [Literature of related art]

### [Patent literature]

Patent literature 1: Japanese Patent Laid-Open No. 8-214774
Patent literature 2: Japanese Patent Laid-Open No. 2004-248593

US 2013/177689 A1 discloses omega supplementation fat blends that comprise (a) one part by weight of a nutritionally beneficial omega-3 fatty acid-containing enriching oil, such as fish oil or algae oil that contains from about 10% to 60% by weight of DHA and/or EPA and (b) at least one-half part by weight of an oxidative stabilization fat that contains a high level of saturated fatty acids, a low level of linoleic acid and, optionally, fat-soluble water-insoluble antioxidants.

### SUMMARY

### [Problems to be Solved]

The present invention addresses a problem of providing a food product improved in terms of off-flavor that occurs over time in the food product which contains a highly unsaturated fatty acid-containing oil/fat, has a PH of 3 to 5.5 and contains a milk material.

### [Means to Solve Problems]

The inventor made earnest studies to solve the problem.

The method in patent literature 1 is complicated because of the necessity of "filling into the oxygen-blocking sealed container". In addition, in the method in patent literature 2, it is necessary to use the fish oil that has been "deodorized", but details thereof have not been disclosed, and patent literature 2 cannot be used as a reference.

The inventor further made a study and completed the present invention with the finding that off-flavor that occurs over time can be suppressed by blending a plant fat which comprises lauric acid in a manner that an amount of the lauric acid is a predetermined range of times of a total amount of DHA and EPA.

That is, the present invention relates to the following.
(1) A method for producing a food product, which contains 0.05 to 2 mass% of DHA and EPA in total, has a pH of 3 to 5.5 and contains 1 mass% or more of nonfat milk solids, by blending a plant fat comprising lauric acid in a manner that an amount of the lauric acid derived from the plant fat is 0.005 to 8 times by mass of the total amount of DHA and EPA.
(2) A method for suppressing off-flavor that occurs over time in a food product, which contains 0.05 to 2 mass% of DHA and EPA in total, has a pH of 3 to 5.5 and contains 1 mass% or more of nonfat milk solids, by blending plant fat comprising lauric acid in a manner that an amount of the lauric acid derived from the plant fat is 0.005 to 8 times by mass of the total amount of DHA and EPA.

### [Effect]

The present invention can provide, by a simple method, a food product in which off-flavor that occurs over time can be suppressed in the food product which contains a highly unsaturated fatty acid-containing oil/fat, has a pH of 3 to 5.5 and contains a milk material.

### DESCRIPTION OF THE EMBODIMENTS

Specifically, a food product according to the methods in the present invention which has a pH of 3 to 5.5 and contains a milk material may be yoghurt, acidic milk beverages, or cheese. The food product is

Here, yoghurt can be defined as a fermented food product made by mixing milk with microorganisms such as lactic acid bacterium or the like and fermenting the milk. However, in the present invention, the food product which is obtained without performing fermentation, that is, the food product which is obtained by mixing the milk material with lactic acid and other acids to obtain a predetermined pH is also included in yoghurt.

In addition, an acidic milk beverage is an acidic beverage comprising a milk component.

The pH is more desirably 3.5 to 5.5, and further desirably 4 to 4.6.

Moreover, although the reason is unknown, it was observed that in a food product containing a highly unsaturated fatty acid-containing oil/fat, off-flavor tends to occur easily if the pH is in an acidic range. The present invention is characteristic in that off-flavor derived from a highly unsaturated fatty acid can be suppressed even if the pH is low, and the present invention is preferable because the effect becomes apparent by being applied to a food product having a low pH.

A milk material is a raw material derived from milk and specifically includes milk, milk fat, skim milk powder, whole milk powder, low-fat milk, whey, or casein sodium. In the present invention, one or more raw materials selected from these can be used.

An amount of the milk material in the food product according to the methods of the present invention is required to be, in the form of nonfat milk solids, 1 mass% or more, more desirably 2 to 50 mass%, and further desirably 3 to 15 mass%. The effect of the present invention is remarkably exhibited and is preferable by containing an appropriate amount of an appropriate milk material.

The food product according to the methods of the present invention contains 0.05 to 2 mass% of docosahexaenoic acid (simply referred to as DHA) and eicosapentaenoic acid (simply referred to as EPA) in total. Here, DHA and EPA are contained in the form of triglycerides. A total amount of DHA and EPA is more desirably 0.1 to 1.5 mass% and further desirably 0.1 to 1 mass%. DHA and EPA are materials that have been reported to have various beneficial physiological effects in recent years, and by including a predetermined amount of DHA and EPA, various food products which appeal the effects of DHA or EPA can be obtained.

The food product according to the methods of the present invention contains lauric acid derived from a plant fat in an amount of 0.005 to 8 times by mass of the total amount of DHA and EPA. The amount is more desirably 0.008 to 7 times by mass and further desirably 0.009 to 7 times by mass. Moreover, the lauric acid referred to here is contained in the form of a constituent fatty acid of oil/fat, and "comprising lauric acid" in the present invention means comprising an oil/fat having lauric acid as a constituent fatty acid, but does not mean comprising lauric acid in a state of a fatty acid.

By comprising a predetermined amount of lauric acid with respect to the total amount of DHA and EPA, the occurrence of the over-time off-flavor derived from DHA or EPA can be suppressed.

The plant fat comprising lauric acid is typically coconut oil and palm kernel oil. In the present invention, in addition to these oil/fats, oil/fats obtained by subjecting these oil/fats to one or more processes selected from fractionation, curing and transesterification can be used. Moreover, in transesterification in particular, a form in which an oil/fat other than the oil/fat comprising lauric acid is used as a part is also included.

Moreover, in the present invention, the effect is limited with lauric acid derived from animal fat, specifically milk serving as the raw material. In addition, in the first place, animal fat containing a large amount of lauric acid does not practically exist, and in the present invention, the amount of lauric acid is adjusted by blending plant fat.

In the present invention, the oil/fat comprising DHA and EPA that has been subjected to an antioxidant treatment is desirably used. As the antioxidant treatment, a well-known method can be employed as appropriate and the antioxidant treatment is not limited to a specific method.

The gist of the present invention is that, in the food product comprising the DHA- and EPA-containing oil/fat, the occurrence of the off-flavor of the food product can be suppressed by blending the oil/fat comprising a predetermined amount of lauric acid. Therefore, whether or not the oil/fat comprising DHA and EPA has been subjected to the antioxidation treatment can be appropriately set depending on a shelf life required for the food product to be applied and the amount of DHA and EPA to be blended.

The present invention is regarded as a method for producing a food product which contains 0.05 to 2 mass% of DHA and EPA in total, has a pH of 3 to 5.5 and contains a milk material. A characteristic thereof is that a plant fat comprising lauric acid is blended in a manner that an amount of the lauric acid derived from the plant fat is 0.005 to 8 times by mass of the total amount of DHA and EPA.

In addition, the present invention is regarded as an invention relating to a method for suppressing off-flavor that occurs over time in a food product which contains 0.05 to 2 mass% of DHA and EPA in total, has a pH of 3 to 5.5 and contains a milk material. A characteristic thereof is that a plant fat comprising lauric acid is blended in a manner that an amount of the lauric acid derived from the plant fat is 0.005 to 8 times by mass of the total amount of DHA and EPA.

In the present invention, various raw materials can be appropriately used within a range in which the effects of the present invention are not impaired. Specifically, the raw material may be a sweetener, a colorant, a fragrance, an emulsifier, and a thickener.

The following examples are described.

### Example

Study 1 Relationship between pH and flavor in food product containing highly unsaturated fatty acid-containing oil/fat

An oil-in-water emulsion containing the highly unsaturated fatty acid-containing oil/fat was prepared by the composition in Table 1-1. The preparation method was in accordance with "OPreparation method of oil-in-water emulsion". The obtained oil-in-water emulsion was stored for a fixed period and then subjected to a sensory evaluation. The method was in accordance with "OEvaluation method of oil-in-water emulsion". Results were shown in Table 1-2.

**Table 1-1 Composition**

| | Test 1-1 | Test 1-2 | Test 1-3 | Test 1-4 | Test 1-5 |
|---|---|---|---|---|---|
| Highly unsaturated fatty acid-containing oil/fat | 0.8 | 0.8 | 0.8 | 0.8 | 0.8 |
| Emulsifier 1 | 1 | 1 | 1 | 1 | 1 |
| Gelatinizing agent | 0.3 | 0.3 | 0.3 | 0.3 | 0.3 |
| Water | 97.9 | 97.9 | 97.9 | 97.9 | 97.9 |
| Total | 100 | 100 | 100 | 100 | 100 |
| pH | 7 | 6 | 5 | 4 | 3 |

| | | | | | |
|---|---|---|---|---|---|
| (Unit of the composition is mass%) •As the highly unsaturated fatty acid-containing oil/fat, an oil/fat containing 62.5 mass% of DHA and EPA in total was used. •As Emulsifier 1, water-soluble soybean polysaccharide "soyafibe-SDA100" manufactured by Fuji Oil Co., Ltd. was used. •As the gelatinizing agent, xanthan gum "San-Ace" manufactured by San-Ei Gen F.F.I., Inc. was used. | | | | | |

OPreparation method of oil-in-water emulsion
1. According to the composition, 3 mass% of a gelatinizing agent solution, 5 mass% of an emulsifier solution, and the highly unsaturated fatty acid-containing oil/fat were sequentially added to ion-exchanged water.
2. Processed by a TK homomixer for 8000 rpm × 5 minutes.
3. Adjusted pH according to the composition. At this time, phosphoric acid or baking soda was used.
4. Homogenized twice by a high pressure homogenizer at (150 + 50 bar).
5. Sterilized at an end-point temperature of 90°C.
6. Filled to a container.
7. Quenched to 5°C.

OEvaluation method of oil-in-water emulsion
1. Each sample obtained by the "OPreparation method of oil-in-water emulsion" was stored for 14 days in an incubator at 5°C.
2. The samples after the storage were subjected to a sensory-evaluation according to the following criteria by a panel of five panellists.
4 points No deterioration odour is felt at all.
3 points Although there is a slight change in odour, no deterioration odour is felt.
2 points Slight deterioration odour is felt.
1 point Distinct deterioration odour is felt.

**Table 1-2 Results**

| | Test 1-1 | Test 1-2 | Test 1-3 | Test 1-4 | Test 1-5 |
|---|---|---|---|---|---|
| Result of sensory test | 2 | 2 | 2 | 1 | 1 |

### Consideration

Although it is a simple evaluation, as shown in the results, it was shown that when the pH is low, the deterioration odour derived from the highly unsaturated fatty acid-containing oil/fat is more strongly felt.

Moreover, there was almost no difference in physical properties (appearance, median diameter, and the like) resulted from differences in pH.

### Study 2 Antioxidant treatment for highly unsaturated fatty acid-containing oil/fat

The antioxidation treatment for the highly unsaturated fatty acid-containing oil/fat was performed as described in Table 2-1. The treatment method was in accordance with "OAntioxidant treatment method for highly unsaturated fatty acid-containing oil/fat".

**Table 2-1 Composition**

| | | Test 2-1 | Test 2-2 | Test 2-3 | Test 2-4 | Test 2-5 | Test 2-6 | Test 2-7 | Test 2-8 |
|---|---|---|---|---|---|---|---|---|---|
| Water phase | Ascorbic acid | 0.27% | 0.28% | 0.27% | 0.27% | 0.27% | - | - | - |
| | Sodium ascorbate | 0.80% | 0.83% | 0.82% | 0.81% | 0.80% | 1.40% | 1.39% | 1.41% |
| | Catechin preparation | 0.19% | 0.20% | 0.20% | 0.20% | 0.19% | 0.26% | 0.26% | 0.26% |
| | Granulated sugar | 0.37% | 0.38% | 0.38% | 0.38% | 0.37% | 0.58% | 0.58% | 0.58% |
| | Water | 1.18% | 1.23% | 1.21% | 1.21% | 1.19% | 1.60% | 1.59% | 1.61% |
| Oil phase | Highly unsaturated fatty acid-containing oil/fat | 85.24% | 84.62% | 84.90% | 84.92% | 85.13% | 80.00% | 80.10% | 79.85% |
| | Emulsifier | 1.33% | 1.38% | 1.36% | 1.36% | 1.34% | 1.40% | 1.39% | 1.41% |
| | Soybean oil | 10.62% | 11.08% | 10.86% | 10.85% | 10.71% | 14.76% | 14.69% | 14.88% |
| Total | | 100.00% | 100.00% | 100.00% | 100.00% | 100.00% | 100.00% | 100.00% | 100.00% |

| | | | | | | | | | |
|---|---|---|---|---|---|---|---|---|---|
| (Unit of the composition is mass%) •As the catechin preparation, "Sunphenon 90S" manufactured by Taiyo Kagaku Co. Ltd. was used. •As the highly unsaturated fatty acid-containing oil/fat, an oil/fat containing 48.5 weight% of DHA and EPA in total was used. •As the emulsifier, polyglycerin condensed ricinoleic acid ester "CRS-75" manufactured by Sakamoto Yakuhin Kogyo Co., Ltd. was used. | | | | | | | | | |

OAntioxidant treatment method for highly unsaturated fatty acid-containing oil/fat
1. The ingredients classified into the water phase and the ingredients classified into the oil phase were respectively mixed and dissolved.
2. The water phase and the oil phase were mixed and slightly emulsified.
3. The emulsion of step 2 was emulsified by a high pressure homogenizer (37 MPa, 20 pass).

### Study 3 Preparation of yoghurt

The yoghurt was prepared as described in Table 3-1. The preparation method was in accordance with "OPreparation method of yoghurt".

The obtained yoghurt was subjected to a sensory evaluation. The method was in accordance with "OSensory evaluation method of yoghurt". Results were shown in Table 3-2.

**Table 3-1 Composition**

| | | Comparative example 3-1 | Comparative example 3-2 | Example 3-1 | Example 3-2 | Example 3-3 | Example 3-4 | Example 3-5 | Example 3-6 | Comparative example 3-3 | Example 3-7 | Example 3-8 |
|---|---|---|---|---|---|---|---|---|---|---|---|---|
| Water phase | Milk | 52.30 | 39.00 | 39.00 | 38.00 | 35.00 | 33.81 | 20.12 | 84.22 | 84.22 | 84.22 | 84.22 |
| | Low-fat milk | 46.59 | 59.81 | 59.80 | 60.79 | 63.77 | 64.70 | 78.29 | 14.90 | 14.9 | 14.9 | 14.9 |
| | Skim milk powder | 0.50 | 0.28 | 0.28 | 0.27 | 0.22 | 0.22 | - | - | - | - | - |
| Oil phase | Sample obtained in Test 2-1 | 0.61 | - | - | - | - | - | - | - | - | - | - |
| | Sample obtained in Test 2-2 | - | 0.91 | 0.91 | 0.91 | 0.91 | - | - | - | - | - | - |
| | Sample obtained in Test 2-3 | - | - | - | - | - | 1.06 | 1.06 | - | - | - | - |
| | Sample obtained in Test 2-4 | - | - | - | - | - | - | - | 0.73 | 0.73 | 0.73 | 0.73 |
| | Lauric oil/fat 1 | - | - | - | - | - | - | - | 0.15 | - | - | - |
| | Non-lauric oil/fat 1 | - | - | - | - | - | - | - | - | 0.15 | - | - |
| | Lauric oil/fat 2 | - | - | - | - | - | - | - | - | - | 0.15 | - |
| | Lauric oil/fat 3 | - | - | 0.01 | 0.03 | 0.10 | 0.21 | 0.53 | - | - | - | 0.15 |
| Total | | 100.00 | 100.00 | 100.00 | 100.00 | 100.00 | 100.00 | 100.00 | 100.00 | 100.00 | 100.00 | 100.00 |
| DHA + EPA (mass%) | | 0.25 | 0.37 | 0.37 | 0.37 | 0.37 | 0.44 | 0.44 | 0.30 | 0.30 | 0.30 | 0.30 |
| Amount of lauric acid/(DHA + EPA) | | - | - | 0.013 | 0.038 | 0.126 | 0.221 | 0.557 | 0.239 | 0.001 | 0.243 | 0.237 |
| Nonfat milk solids (mass%) | | 9.5 | 9.5 | 9.5 | 9.5 | 9.5 | 9.5 | 9.5 | 8.5 | 8.5 | 8.5 | 8.5 |

| | | Comparative example 3-4 | Example 3-9 | Example 3-10 | Example 3-11 | Example 3-12 | Example 3-13 | Example 3-14 | Example 3-15 | Example 3-16 | Example 3-17 |
|---|---|---|---|---|---|---|---|---|---|---|---|
| Water phase | Milk | 99.9 | 99.8 | 99.75 | 99.69 | 99.38 | 20.72 | 22.85 | 87.95 | 87.11 | 86.26 |
| | Low-fat milk | - | - | - | - | - | 74.81 | 72.81 | - | - | - |
| | Water | - | - | - | - | - | 3.1 | 2.7 | 4.5 | 4.5 | 4.5 |
| | Skim milk powder | - | - | - | - | - | - | 0.02 | 4.7 | 4.77 | 4.84 |
| Oil phase | Highly unsaturated fatty acid-containing oil/fat | 0.1 | 0.1 | 0.1 | 0.1 | 0.1 | - | - | - | - | - |
| | Sample obtained in Test 2-5 | - | - | - | - | - | 1.21 | 1.21 | - | - | - |
| | Sample obtained in Test 2-6 | - | - | - | - | - | - | - | 1.55 | - | - |
| | Sample obtained in Test 2-7 | - | - | - | - | - | - | - | - | 2.06 | - |
| | Sample obtained in Test 2-8 | - | - | - | - | - | - | - | - | - | 2.58 |
| | Lauric oil/fat 3 | - | 0.1 | 0.15 | 0.21 | 0.52 | 0.11 | 0.11 | 0.77 | 1.03 | 1.29 |
| | Emulsifier 1 | - | - | - | - | - | - | 0.3 | 0.5 | 0.5 | 0.5 |
| | Emulsifier 2 | - | - | - | - | - | 0.05 | - | 0.03 | 0.03 | 0.03 |
| Total | | 100.0 | 100.0 | 100.0 | 100.0 | 100.0 | 100.0 | 100.0 | 100.0 | 100.0 | 100.0 |
| DHA + EPA (mass%) | | 0.05 | 0.05 | 0.05 | 0.05 | 0.05 | 0.50 | 0.50 | 0.60 | 0.80 | 1.00 |
| Amount of lauric acid/amount of (DHA + EPA) | | - | 0.946 | 1.419 | 1.987 | 4.919 | 0.104 | 0.104 | 0.606 | 0.609 | 0.611 |
| Nonfat milk solids (mass%) | | 8.3 | 8.3 | 8.3 | 8.3 | 8.2 | 9.2 | 9.2 | 11.8 | 11.8 | 11.8 |

| | | | | | | | | | | | |
|---|---|---|---|---|---|---|---|---|---|---|---|
| (Unit of the composition is mass%) •As the highly unsaturated fatty acid-containing oil/fat, an oil/fat containing 48.5 mass% of DHA and EPA in total was used. •As Lauric oil/fat 1, "purified coconut oil" manufactured by Fuji Oil Co., Ltd. was used. •As Non-lauric oil/fat 1, "Parmele 26" which is a PMF manufactured by Fuji Oil Co., Ltd. was used. •As Lauric oil/fat 2, "palm kernel oil" manufactured by Fuji Oil Co., Ltd. was used. •As Lauric oil/fat 3, "New Melalin-38" (melting point 38°C) which is a hydrogenated oil of palm kernel oil manufactured by Fuji Oil Co., Ltd. was used. •As Emulsifier 1, "Sunsoft A-181E" manufactured by Taiyo Kagaku Co. Ltd. was used. This emulsifier was pentaglycerin monostearate. •As Emulsifier 2, lecithin "SLP-paste" manufactured by Tsuji-seiyu Co., Ltd. was used. •The nonfat milk solids of milk, low-fat milk, skim milk powder are respectively 8.3 mass%, 10 mass%, and 96.2 mass%. | | | | | | | | | | | |

OPreparation method of yoghurt
1. The ingredients classified into the water phase and the ingredients classified into the oil phase were respectively mixed and dissolved.
2. The water phase and the oil phase were mixed and slightly emulsified after being heated to 60°C.
3. The emulsion of step 2 was emulsified by a high pressure homogenizer (15 MPa).
4. The emulsion of step 3 was sterilized at 70°C for 5 minutes.
5. The emulsion of step 4 was cooled to 45°C and 3.0% of commercially available yoghurt was added as a starter.
6. The emulsion of step 5 was fermented at 45°C until the pH became 4.5, and yoghurt was obtained.

### OSensory evaluation method of yoghurt

Samples of respective yoghurt were stored at 10°C for 14 days to 15 days.

Among the samples obtained by the composition in Example 3-1, the sample stored at 10°C on the second day (hereinafter, referred to as the control) was used as a comparison target, and a sensory evaluation was performed according to the following criteria by a panel of five panellists.

Moreover, as an absolute evaluation, the control was preferable because no offensive odour was felt.

5 points Compared with the control, offensive odour is stronger and the food product is inedible.
4 points Compared with the control, offensive odour was strongly felt.
3 points Compared with the control, slight offensive odour was felt.
2 points Compared with the control, although there were some differences, the differences were slight, and the food product was judged to be acceptable.
1 point Equivalent to the control.

In the evaluation on the 14th to the 15th day, a food product having 1 point or 2 points was judged to be qualified.

**Table 3-2 Results**

| | Comparative example 3-1 | Comparative example 3-2 | Example 3-1 | Example 3-2 | Example 3-3 | Example 3-4 | Example 3-5 | Example 3-6 | Comparative example 3-3 | Example 3-7 | Example 3-8 |
|---|---|---|---|---|---|---|---|---|---|---|---|
| Sensory evaluation (14th day) | 3 | 3 | 2 | 1 | 1 | 2 | 2 | 2 | 3 | 2 | 1 |
| Sensory evaluation (15th day) | - | - | - | - | - | - | - | - | - | - | - |
| Judgment of qualification | Unqualified | Unqualified | Qualified | Qualified | Qualified | Qualified | Qualified | Qualified | Unqualified | Qualified | Qualified |

| | Comparative example 3-4 | Example 3-9 | Example 3-10 | Example 3-11 | Example 3-12 | Example 3-13 | Example 3-14 | Example 3-15 | Example 3-16 | Example 3-17 |
|---|---|---|---|---|---|---|---|---|---|---|
| Sensory evaluation (14th day) | - | - | - | - | - | 2 | 2 | 2 | 2 | 2 |
| Sensory evaluation (15th day) | 5 | 2 | 1 | 1 | 1 | - | - | - | - | - |
| Judgment of qualification | Unqualified | Qualified | Qualified | Qualified | Qualified | Qualified | Qualified | Qualified | Qualified | Qualified |

### Consideration

As shown in Table 3-2, it is confirmed that, in the yoghurt which comprises a predetermined amount or more of DHA and EPA in total, the off-flavor in the yoghurt occurring over time can be suppressed by blending the plant fat comprising lauric acid in a manner that the amount of the lauric acid with respect to the total amount of DHA and EPA is a predetermined value.

## Claims

1. A method for producing a food product, which contains 0.05 to 2 mass% of DHA and EPA in total, has a pH of 3 to 5.5 and contains 1 mass% or more of nonfat milk solids, by blending a plant fat comprising lauric acid in a manner that an amount of the lauric acid derived from the plant fat is 0.005 to 8 times by mass of the total amount of DHA and EPA.

2. A method for suppressing off-flavor that occurs over time in a food product, which contains 0.05 to 2 mass% of DHA and EPA in total, has a pH of 3 to 5.5 and contains 1 mass% or more of nonfat milk solids, by blending a plant fat comprising lauric acid in a manner that an amount of the lauric acid derived from the plant fat is 0.005 to 8 times by mass of the total amount of DHA and EPA.

## Patentansprüche

1. Verfahren zum Herstellen eines Lebensmittelprodukts, das insgesamt 0,05 bis 2 Massen-% DHA und EPA enthält, einen pH-Wert von 3 bis 5,5 aufweist und 1 Massen-% oder mehr fettfreie Milchfeststoffe enthält, durch Zumischen eines Pflanzenfetts, das Laurinsäure umfasst, auf eine Weise, dass eine Menge der Laurinsäure, die aus dem Pflanzenfett gewonnen wird, nach Masse das 0,005- bis 8-Fache der Gesamtmenge an DHA und EPA beträgt.

2. Verfahren zum Unterdrücken von Fehlgeschmack, der im Laufe der Zeit in einem Lebensmittelprodukt entsteht, das insgesamt 0,05 bis 2 Massen-% DHA und EPA enthält, einen pH-Wert von 3 bis 5,5 aufweist und 1 Massen-% oder mehr fettfreie Milchfeststoffe enthält, durch Zumischen eines Pflanzenfetts, das Laurinsäure umfasst, auf eine Weise, dass eine Menge der Laurinsäure, die aus dem Pflanzenfett gewonnen wird, nach Masse das 0,005- bis 8-Fache der Gesamtmenge an DHA und EPA beträgt.

## Revendications

1. Procédé destiné à produire d'un produit alimentaire contenant de 0,05 à 2 % en masse de DHA et d'EPA au total, ayant un pH de 3 à 5,5 et contenant 1 % en masse ou plus de solides laitiers non gras, en mélangeant une graisse végétale comprenant de l'acide laurique de manière à ce qu'une quantité d'acide laurique dérivée de la graisse végétale soit de 0,005 à 8 fois en masse de la quantité totale de DHA et d'EPA.

2. Procédé destiné à supprimer le mauvais goût qui se produit au fil du temps dans un produit alimentaire, qui contient 0,05 à 2 % en masse de DHA et d'EPA au total, a un pH de 3 à 5,5 et contient 1 % en masse ou plus de solides de lait écrémé, en mélangeant une graisse végétale comprenant de l'acide laurique de manière à ce qu'une quantité d'acide laurique dérivée de la graisse végétale soit de 0,005 à 8 fois en masse de la quantité totale de DHA et d'EPA.
